Europäisches Patentamt

European Patent Office

Office européen des brevets

(19)

(11) Publication number: 0 494 145 B1

# EUROPEAN PATENT SPECIFICATION

(45) Date of publication of patent specification: 21.09.94   (51) Int. Cl.5: **C08L 77/00**, //(C08L77/00, 23:02,53:00)

(21) Application number: **90910065.3**

(22) Date of filing: **13.06.90**

(86) International application number:
**PCT/US90/03362**

(87) International publication number:
**WO 91/04299 (04.04.91 91/08)**

(54) **IMPACT RESISTANT POLYAMIDE COMPOSITION.**

(30) Priority: **25.09.89 US 412251**

(43) Date of publication of application:
**15.07.92 Bulletin  92/29**

(45) Publication of the grant of the patent:
**21.09.94 Bulletin  94/38**

(84) Designated Contracting States:
**AT BE DE DK FR GB IT LU NL SE**

(56) References cited:
**FR-A- 2 292 016**
**US-A- 4 305 865**
**US-A- 4 537 929**

(73) Proprietor: **AlliedSignal Inc.**
**101 Columbia Road,**
**P.O. Box 2245R**
**Morristown, New Jersey 07960 (US)**

(72) Inventor: **BHOORI, Yousuf Mohammed**
**112 Royal Drive, no. 346**
**Piscataway, NJ 08854 (US)**

(74) Representative: **Brock, Peter William**
**UROUHART-DYKES & LORD**
**91 Wimpole Street**
**London W1M 8AH (GB)**

**Description**

This invention relates to a composition comprising a polyamide, a non-functionalized olefinic polymer, and a functionalized block copolymer; and more particularly, the functionalized tri-block copolymer comprising a tri-block copolymer which comprises poly(styrene) end blocks and poly(ethylene/butylene) mid-blocks.

Polyamide resins, known under the generic name nylon, are noted for a number of their properties such as hardness, high tensile strength, toughness, and rigidity. Although polyamide can be so characterized, there have been continuing attempts to improve the toughness properties of compositions containing polyamides.

For the purpose of the present invention, copolymer, block copolymers and graft copolymers are defined in F. W. Billmeyer, Jr., Textbook of Polymer Science, 2nd edition, Chapter 11, Wiley-Interscience, a Division of John Wiley and Sons, Inc. Graft copolymers are defined in Billmeyer at pages 350-351 as sequences of one monomer which are "grafted" to the "backbone" of a second monomer type. In the present invention, the backbone of the graft copolymer can itself be a copolymer including a block copolymer.

Reference is made to copending U. S. Serial No. 303,038, published as PCT US88/02658 which discloses a composition comprising polyamides and functionalized olefinic polymer.

The prior art relating to high impact resistant polyamide compositions has recognized the use of polymeric impact modifiers. Such polymers include polyolefins which are typically ethylene based copolymers and ethylene based graft copolymers. Improved impact resistance occurs by grafts between the polyamide and a reactive moiety along the backbone of the copolymer chain or a reactive moiety grafted to the copolymer chain. The graft reaction typically takes place at an amine (or amino) end group on the polyamide, i.e., polycaprolactam chain. These types of compositions are typified by the disclosures in U. S. Patent Nos. 3,388,186; 3,456,059; 3,963,799; 3,976,720; 4,305,865; 4,339,555; and 4,427,832, and in articles such as Stinson, Nylon impacted resistance tailored to user need, September 22, 1986. U. S. Patent 4,174,358 is directed to a composition of a polyamide and a polyolefin impact modifier which achieves adhesion by sites which adhere to the polyamide matrix resin. The use of nylon having excess amine end groups used in a combination with impact modifiers is disclosed.

U. S. Patent 4,594,386 discloses compositions of polyamides and ethylene-propylene grafted with maleic anhydride which have improved low temperature impact resistance.

U. S. Patent No. 4,537,929 discloses a glass filled polyamide and an adduct of a polyethylene polymer and an alpha, beta-ethylenically unsaturated dicarboxylic acid compound which can include an ethylene-propylene maleic anhydride graft copolymer.

The Shell Chemical Company has published a Technical Bulletin, Kraton® FG 1901X Rubber, SC 1592-87, printed 12/87, (hereby incorporated by reference). This Bulletin discloses compositions of nylon 6 or nylon 6,6 containing a maleic anhydride functionalized tri-block copolymer consisting of polystyrene end blocks, and poly(ethylene/butylene) mid-block. The Bulletin discloses compositions of nylon 6 or nylon 6,6 and up to 30% by weight of Kraton® G 1651 rubber. Kraton® G 1651 is a nonfunctionalized tri-block copolymer consisting of polystyrene end blocks, and poly(ethylene/butylene) mid-blocks. This material is disclosed in The Shell chemical company Bulletin, shell, Kraton® Polymers for Modification of thermoplastics, (hereby incorporated by reference).

SUMMARY OF THE INVENTION

The present invention relates to a composition comprising at least one polyamide, a non-functionalized olefinic copolymer, and a functionalized triblock copolymer, comprising poly(ethylene/butylene) mid-blocks and poly(styrene) end blocks. The composition preferably comprises a fibrous filler or reinforcement.

By functionalized it is meant that the copolymer has radicals or groups which are covalently reactive with the polyamide including the polyamide end groups. By non-functionalized groups it is meant that the copolymer has no radicals or groups which are covalently reactive with the polyamide including polyamide end groups.

The composition comprises from 30 to 96, preferably, 84 to 96 percent by weight of polyamide based on the weight of total polymer present. There is from 2 to 35, and preferably from 2 to 8, percent by weight of non-functionalized polymer based on the weight of total polymer present, preferably an ethylene/propylene copolymer; and 2 to 35, and preferably about 2 to about 8, percent by weight of a functionalized block copolymer which is a triblock copolymer having poly(styrene) end blocks and poly-(ethylene/butylene) mid blocks based on the weight of total polymer present.

The preferred composition further comprises up to 60, preferably 1 to 60, and more preferably, 20 to 40 percent by weight of a fibrous filler, based on the total weight of polymer and fibrous filler. The fibrous filler preferably is glass fibers, preferably chopped glass fiber.

The composition of the present invention results in articles having improved impact resistance and surface appearance. The articles have greater notched and drop weight impact resistance than articles made of corresponding composition having an amount of either a non-functionalized olefinic polymer or a functionalized block copolymer equal to the combined amount in the composition of the present invention. It is believed that the combination of the random copolymer and the functionalized block copolymer results in improved impact resistance.

Articles molded from the composition of the present invention had a smooth, uniform surface appearance with no apparent flow lines and were superior to articles molded from a composition made with an amount of either the non-functionalized olefinic polymer or a functionalized block copolymer equal to the combined amount in the composition of the present invention.

The compositions of the present invention are stable during processing. They can be extruded at temperatures up to about 550°F (288°C) and in the range of about 500°F as (260°C) to about 550°F (288°C); and molded at temperatures up to about 580°F (304°C) and in the range of about 530°F (277°C) to about 580°F (304°C) without discoloration and with maintenance of physical properties. The compositions retain satisfactory physical properties when tested after being heated to temperatures up to 210°C.

DETAILED DESCRIPTION OF THE PREFERRED EMBODIMENTS

The present invention relates to a composition comprising at least one polyamide, a non-functionalized olefinic polymer, and functionalized block copolymer.

There is from about 30 to about 96, preferably greater than about 50 up to about 90, more preferably from about 70 to about 90 weight percent of at least one polyamide in the composition.

Polyamides suitable for use herein include the long chain polymeric amides having recurring amide groups as part of the polymer backbone and preferably having a number of average molecule weight, as measured by end group titration of about 15,000 to 40,000. The polyamides suitable for use herein can be produced by any conventional process known in the art.

Non-limiting examples of such polyamides are: (a) those prepared by the polymerization of lactams, preferably epsilon-caprolactam (nylon 6); (b) those prepared by the condensation of a diamine with a dibasic acid, preferably the condensation of hexamethylene diamine with adipic acid (nylon 6,6), the condensation of hexamethylene diamine with sebacic acid (nylon 6,10) and polytetramethylene adipamide (nylon 4,6); and (c) those prepared by self-condensation of amino acids, preferably self-condensation of 11-aminoundecanoic acid (nylon-11), nylon 12 ; or random, block, or graft interpolymers consisting of two or more of these polyamides. A useful copolymer is the copolymer of caprolactam, hexamethylene diamine and adipic acid (nylon 6,66).

Polyamides such as nylon-6, nylon 4,6, or nylon 6,6, and copolymers such as nylon 6,66 can contain a variety of terminal functionality, including: (a) a carboxyl group attached to both ends of the polyamide chain (acid terminated); (b) a carboxylic acid group attached to one end and an amine group attached to the other end of the polyamide chain (the "capped" end); (c) an amino group attached to both ends of the polyamide chain (amine terminated); and (d) a carboxyl group attached to one end and an amine group attached to the other end of the polyamide chain ("balanced" termination).

The present invention includes polyamides such as polycaprolactam having at least two end groups as amine end groups. While polyamides are typically linear molecules having only two end groups, polyamides such as polycaprolactam can be made with side chains by the use of a branching material such as a multifunctional reactive moiety. Such polycaprolactam molecules having at least two of its end groups as amine end groups are included in the description of excess amine terminated polycaprolactams of the present invention. Such amine terminated polycaprolactam has from about 3 to about 97 mole percent of the polycaprolactam molecules having at least two end groups as amine end groups. Polycaprolactams having "excess" amine termination are polycaprolactams having molecules with more than 50 mole percent and preferably about 60 to about 97 mole percent of the total number of end groups as amine end groups. Amine end group termination is typically produced by including an excess of diamines during polymerization. A preferred diamine is hexamethylene diamine.

Other examples of diamines suitable for use herein include tetramethylene diamine, pentamethylene diamine, octamethylene diamine, decamethylene diamine; and dodecylamine.

A preferred polyamide is polycaprolactam. The polycaprolactam, if unwashed, can contain up to about 15 percent, and typically from about 8 to about 12 percent by weight based on the weight of polycaprolactam, of caprolactam monomer or water extractable caprolactam oligomers.

The composition of the present invention includes a non-functionalized olefinic co-polymer. There is from 2 to 35, preferably 5 to 25, and more preferably, 5 to 20 weight percent of the non-functionalized block copolymer based on the total polymer.

The non-functional olefinic copolymers are copolymers of an ethylene and an alpha-olefin other than ethylene. The alpha-olefin preferably is an alpha-olefin selected from at least one $C_3$-$C_6$ alpha-olefin, with propylene being most preferred. Other $C_3$-$C_6$, such as 1-butene, 1-pentane, and 1-hexene can be used. The copolymer can contain other monomers such as dienes. Preferred dienes include butadiene, 1,4-hexadiene, dicyclopentadiene, methylene norborene, cyclooctadiene and the like. The diene can be conjugated or nonconjugated.

Preferred copolymers include ethylene propylene copolymers (EP) and ethylene propylene diene copolymers (EPDM).

Useful non-functional olefinic copolymers of ethylene and an alpha-olefin contains from about 30 to about 60 and preferably about 40 to about 45 weight precent of the alpha-olefin based on the ethylene. The copolymer has a number average molecular weight of from 2,000 to 100,000, preferably 2,000 to 65,000, more preferably 5,000 to 35,000, and most preferably 5,000 to 20,000.

The most preferred non-functional olefinic copolymers are EP and EPDM copolymers sold by Exxon Chemical Company under the trademarks Vistalon® and Exxelor®. Useful EP copolymers typically have a Mooney viscosity according to ASTM D-1646 using radial cavity dies (ML + 4 at 125-C) of 10 to 75, and preferably 10 to 30, and a specific gravity of from 0.86 to 0.90. The most preferred EP copolymer is Exxelor® PE 901 reported to have a Mooney viscosity of 22.0-25.0; and ethylene to propylene weight ratio of 55/45; and a narrow molecular weight distribution.

Useful EPDM copolymers typically have a Mooney viscosity (ASTM D-1646, as above) of 10 to 80, and preferably 45 to 65. A preferred EPDM copolymer is Vistalon$^R$ 7000.

The composition also includes a functionalized tri-block copolymer comprising poly(ethylene/butylene) mid-blocks and poly(styrene) end blocks. There is from 5 to 50 percent by weight of the poly(styrene) end blocks, from 50 to 90 percent by weight of the poly(ethylene/butylene) block, and up to 5 percent by weight of the functionalized groups, in the functionalized block polymer. Preferably, the mid-blocks comprise 25 to 50, more preferably 30 to 45, and most preferably 35 to 40 percent by weight of butylene and corresponding amounts of ethylene. The butylene can be derived from either 1,2 or 1,4 butadiene. The solution viscosity in toluene at 25°C is preferably from 2500 to 25,000 centipoises (CPS) and more preferably, from 3000 to 9000 CPS. There is from 2 to 35, preferably 5 to 25 and more preferably 5 to 20 weight percent of the functionalized block copolymer based on the total polymer.

The functionalized tri-block copolymer has an average of at least two, preferably from 2 to 10, more preferably 2 to 6, and most preferably 2 to 4 reactive moieties per copolymer molecule which is preferably grafted to the copolymer. It is believed that greater than one reactive moiety groups on the reactive copolymer enhances the crosslinking between the amine end groups of the polyamide and the reactive copolymer. The reactive moiety is preferably a carboxyl or carboxylate functionality, which can be supplied by reacting the tri-block copolymer with an unsaturated reactive moiety taken from the class consisting of alpha, beta-ethylenically saturated dicarboxylic acids having from 4 to 8 carbon atoms, or derivatives thereof. Such derivatives include anhydrides of the dicarboxylic acids, or the metal salts of the acids, or the monoester of the dicarboxylic acid having from 0 to 100 percent of the carboxylic acid groups ionized by neutralization with metal basic salt. Illustrative of such acids and derivatives are maleic acid, maleic anhydride, maleic acid monoethyl ester, metal salts of maleic acid monoethyl ester, fumaric acid, fumaric acid monoethyl ester, itaconic acid, vinyl phthalic acid, metal salts of fumaric acid monoethyl ester, monoesters of maleic or fumaric acid or itaconic acids where the alcohol is methyl, propyl, isopropyl, butyl, isobutyl, hexyl, cyclohexyl, octyl, 2-ethyl hexyl, decyl, stearyl, methoxy ethyl, ethoxy ethyl, hydroxy or ethyl. The reactive moiety can be grafted to the copolymer by any well-known grafting process. Alternatively, the reactive moiety can be copolymerized into the backbone of the copolymer. The reactive copolymer can include one or more types of reactive moieties.

There is from up to 60, preferably 1 to 60, more preferably 20 to 40 weight percent, based on the total weight of the polymer, of a fibrous filler preferably glass fibers, which are preferably chopped or short fibers.

The glass fiber reinforcement is preferably fiber which is at least 0.005 inch (0.0127cm) in average length in the final product. These short lengths of fibrous reinforcement are obtained because of the characteristics of the processing apparatus used to compound or blend this reinformcent with the

4

thermoplastic resin. Typically, the glass fibers initially blended into the composition are from 1/16 to 1 inch (0.159 to 2.54cm) in length, and preferably 1/8 (0.318cm) to 1/4 inch (0.318 to 0.635cm) in length. For example, if fibers 1/8 inch (0.318cm) or longer are placed in the feed hopper of a single screw extruder along with the resin, the fibers will ordinarily be broken down into lengths shorter than the original 1/8 inch (0.318cm) starting length because of abrasion, shear, turbulence, mechanical work performed upon the fibers. Longer lengths (e.g. means lengths longer than 0.005 inch (0.0127cm) in a major portion of the short fiber reinforcement) may be retained by minimizing the amount of shear or mechanical breakdown of fiber length, with some sacrifice in homogeneity or prolonged processing times. Another processing machine which may be used to blend and/or manufacture the short fiber-filled resinous sheet is a twin screw extruder. In this case, the filamentary reinforcing material may be added to agitated heat plastified polymer between the screws of the extruder through a feed port such as a volatile (vent) port. In the latter case, the filamentary reinforcing material may be fed to the twin screw extruder in the form of yarn or roving, and the short fiber lengths would be obtained by the mechanical breakup performed by the mixing action of the screws.

Glass fibers normally used for reinforcement of thermoplastics can be treated or coated with a sizing composition. Standard sizing agents usually consist of several components, each of which possesses a distinct function. For example, a binder gives the glass fiber strand integrity for workability and prevents fuzzing and aids in distribution of the sizing agent; a lubricant prevents destruction of the strand by abrasion of the individual filaments against each other and against fiber handling equipment; a coupling agent assists in obtaining greater adhesion between the glass fibers and the polymeric composition.

The weight ratio of non-functional olefinic polymer to functionalized block copolymer is preferably 1:5 to 5:1, more preferably from 1:5 to 2:1 and most preferably 1:2 to about 1:1.

The composition of this invention can also contain one or more conventional additives which do not materially affect the impact properties of the composition or the present invention such as stabilizers and inhibitors of oxidative, thermal, and ultraviolet light degradation, lubricants and mold release agents, colorants, including dyes and pigments, flame-retardants, particulate and fibrous fillers and reinforcements, nucleators and plasticizers. These additives are commonly added during the mixing strip.

Representative oxidative and thermal stabilizers which may be present in blends of the present invention include Group I, metal halides, e.g., sodium, potassium, lithium with cuprous halides, e.g., chloride, bromide, iodide; hindered phenols, hydroquinones, and varieties of substituted members of those groups and combinations thereof.

Representative ultraviolet light stabilizers include various substituted resorcinols, salicylates, benzotriazoles and benzophenones.

Representative lubricants and mold release agents include stearic acid, stearyl alcohol, and stearyl amides. Representative organic dyes include nigrosine, while representative pigments, include titanium dioxide, cadmium sulfide, cadmium selenide, phthalocyanines, ultramarine blue, carbon black, and the like. Representative fillers include carbon fibers, mineral fibers, thermotropic polyester fibers, aramid fibers, amorphous silica, asbestos, calcium silicate, aluminum, silicate, magnesium carbonate, kaolin, chalk, powdered quartz, mica, and feldspar. Glass fiber filler is preferred.

Representative plasticizers include lactams such as caprolactam and lauryl lactam, sulfonamides such as o,p-toluenesulfonamide and N-ethyl, N-butyl benzlsulfonamide, o,p-toluenesulfonamide and other plasticizers known in the art.

Representative particulate filler may be selected from a wide variety of minerals, metals, metal oxides, soliceous materials, metal salts, and mixtures thereof. These fillers may optionally be treated with various coupling agents or adhesion promoters, as is known to those skilled in the art. Examples of fillers included in these categories are alumina, aluminum hydrates, feldspar, asbestos, talc, calcium carbonates, clay, carbon black, quartz, novaculite and other forms of silica, kaolinite, bentonite garnet, mica, saponite, beidellite, calcium oxide and calcium hydroxide. The foregoing recited fillers are illustrative only and are not meant to limit the scope of fillers that can be utilized in this invention.

The particulate filler may be added to the thermoplastic resin before, during, or after the addition of the short glass fibers to the resin. Thus, for example, filler and resin pellets may be fed to the feed hopper of a single screw exdtruder; the mixture is blended and conveyed towards the die. Short glass fibers can be added to the molten mixture at a vent hole or other such opening downstream of the feed hopper, and the mixture then extruded into pellets. functionalized olefinic copolymer, and the functionalized block copolymer in a screw extruder or other conventional plasticating device such as Brabender, Banbury mixer or mill. The composition can be melt blended at a temperature greater than the melt temperature of the polyamide and +he functionalized copolymer. Preferably, the composition is melt blended at a temperature at least about 10°F to about 75°F (5.6°C to 41.6°C) and more preferably, about 10°F to about 30°F (5.6°C to 16.6°C) above the melt temperature of the highest melt temperature polyamide in the composition.

A preferred method is to melt blend the composition in an extruder above the polymer melt temperature. It is preferred to feed the fiberglass into the mixture through a side port. The fiberglass can be fed in a second extrusion pass. If the fiberglass is to be fed into the throat of the extruder, it is preferred to first pre-blend the polymer and impact modifier. Preferred extruder conditions for polyepsiloncaprolactam are above 260°C temperature profile.

A preferred composition comprises from 84 to 96 percent by weight of polyamide, from 2 to 8 percent by weight of non-functional olefinic polymer and 2 to 8 percent by weight of functional block copolymer. Optionally, there is from 20 to 40 percent by weight of glass fiber.

The compositions can be made into a wide range of useful articles by conventional molding methods employed in the fabrication of thermoplastic articles, i.e., as molded parts, extruded shapes, e.g., tubing, films, sheets, fibers, laminates and wire coating. "Molding" means forming an article by deforming the blend in the heated plastic state.

The Examples set forth below illustrate the nature of the invention and the manner of carrying it out. The invention should not be considered as being limited to the details of the Examples. All parts are percents by weight unless otherwise indicated.

The Examples show improved notched Izod impact resistance when combining a polyamide with the non-functionalized olefinic polymer and functionalized block copolymer compound compared to a composition containing an amount of either non-functionalized olefinic polymer or functionalized block copolymer alone, equal to the amount of the olefinic and block copolymer.

The compositions in the following Examples were generally prepared by first dry blending the materials. The dry blended material was melt extruded at about 450°F to about 550°F (232°C to 288°C) in a three stage, 2-1/2 inch (6.35cm) diameter, Egan single screw extruder, at a rate of 180 (81.7 kg) pounds per hour. When used, short glass fibers were fed into the side of the extruder in the second stage. Extrudate strands were rapidly passed through a water bath. The strands were passed through a pelletizing machine and the pellets were collected. Test specimens were injection molded at a temperature typically from 10°F to 30°F (5.6°C to 16.6°C) above each composition's melting point. The mold temperature was maintained at 160-180°F (71°C to 82°C). The molding cycle was 10 to 30 seconds forward ram, and 10 to 25 seconds on hold.

The melt index was determined according to a modified ASTM D-1238 Condition Q Procedure. The resin was preheated for 5 minutes at 280°C; and a 3000 gram weight was used. Resin was allowed to flow for 1 minute; followed by measuring the weight resin flow during the next minute. Results are reported in grams/per 10 minutes. The notch Izod impact values were tested according to ASTM D-256 notched Izod using 1/8 inch (0.318cm) or 1/4 inch (0.635cm) test specimens as indicated. The tensile strength, modulus, and elongation were tested according to ASTM D-638, and the flexural properties were tested according to ASTM D-790. Drop weight impact was tested according to ASTM D-3029. Heat Deflection Temperature was tested according to ASTM D-646 at 264 psi (1812 kPa) and 66 psi (455 kPa).

The amine terminated polyepsiloncaprolactam had excess amino end groups using hexamethylene diamine. The amine terminated polycaprolactam was polyepsiloncaprolactam having about 80-85 mole percent amino end groups and a formic acid viscosity (FAV) of 57 unless otherwise indicated.

The balance terminated polycaprolactam was polyepsiloncaprolactam having 50 mole percent acid end groups and 50 mole percent amine end groups with a formic acid viscosity (FAV) of 70 unless otherwise indicated.

The functionalized block copolymers used in the Examples was Kraton® FG 1901 described above. This is reported to be a low molecular weight tri-block copolymer of styrene-ethylene/butylene-styrene blocks; having a low molecular weight, a styrene to ethylene/butylene ratio of 28/72; 2 weight percent of functionally bound maleic anhydride; and a glass transition temperature of the ethylene butylene block of -42°C.

The non-functionalized olefinic polymer used includes Vistalon® 730 and 878 ad Exxelor® 901 ethylene-propylene copolymer (EPM) sold by the Exxon Chemical Co. Vistalon® 730 is reported to have an ethylene content of 45 weight percent, a corresponding amount of propylene and a Mooney viscosity at 127°C of 14. The Vistalon® 878 is reported to have an ethylene content of 50 weight percent, a corresponding amount of propylene and a Mooney viscosity at 127°C of 25. The Exxelor® 901 is reported to have an ethylene content of 55 weight percent, and a Mooney viscosity of 22-26. All are reported to have a narrow molecular weight distribution.

The glass filler (fiberglass) used in the Examples was PPG 3540 short (1/8 inch (0.318cm) long) type E glass (borosilicate), sized for nylon, and having a filament diameter of about 10 μm.

EXAMPLE 1

Example 1 and Comparative Examples 1-5 contained 55.61 weight percent of balanced nylon 6; 1 weight percent of a masterbatch of 20 weight percent sodium stearate and 80 weight percent nylon 6; 6.1 weight percent tetrakis [methylene 3-(3', 5'-di-tert-butyl-4'hydroxyphenyl) propionate] made by Ciba Geigy Corporation as Irganox® 1010; 0.29 percent Ultranox® 626 sold by Borg-Warner and understood to be bis-[2,4,-di-t-butyl penyl] pentaerythritol dyphosphosphite; and 10 percent of a impact modifier which was varied. All used PPG 3540 short fiberglass fiber. The impact modifiers used include Kraton® 1901X; and Vistalon® MD 730 (described above). Vistalon® 746 made by the Exxon Chemical Co. and Kraton® 1651 and 1650 made by the Shell Chemical Co. were used in the Comparative Examples.

Vistalon® 746 is maleated functionalized ethylene/propylene copolymer sold by the Exxon Chemical Co. and reportedly has an ASTM D-1646, radial cavity die Mooney Viscosity (ML1 at 125-C) of 17±5, an ash weight percent of 0.2, a mixumum water content of 0.5 weight percent.

Kraton® 1651 is reported to be a nonfunctionalized tri-block copolymer having poly(styrene) end blocks and poly(ethylene/butylene) mid-blocks and reported to have a styrene/rubber ratio of 32/58, and a glass transition temperature of -42°C and is characterized as having high molecular weight (polystyrene block molecular weight of about 30,000). Kraton® 1650 is similar to 1651 except that the styrene to rubber ratio is 29/71 and it has a medium low molecular weight with the styrene block molecular weight being about 10,000 (Shell Kraton® Polymers for Modification of Thermoplastics Bulletin, supra). Results are summarized in Table 1 below:

Table 1

| | EX.1 | Comp.1 | Comp.2. | Comp.3 |
|---|---|---|---|---|
| Nylon 6 (balanced) | 55.61 | 55.61 | 55.61 | 55.61 |
| Fiberglass | 33 | 33 | 33 | 33 |
| Kraton 1901 | 5 | 10 | - | 6.5 |
| Kraton 1651 | - | - | - | 3.5 |
| Kraton 1650 | - | - | - | - |
| Vistalon 730 | 5 | - | - | - |
| Vistalon 746 | - | - | 10 | - |
| Tensile Str. (psi x$10^3$) [kPa x $10^3$] | 21.6 [148.8] | 20 [137.8] | 19 [130.9] | 21.8 [150.2] |
| Flex. Str. (psi x $10^3$) [kPa x $10^3$] | 31.3 [215.6] | 25 [172.2] | 29 [199.8] | 33.0 [227.4] |
| Flex. Mod. (psi x $10^3$) [kPa x $10^3$] | 1.1 [7.6] | -[-] | -[-] | 1.1 [7.6] |
| Flex Mod. (psi x $10^6$) [kPa x $10^6$] | -[-] | 1.0 [6.89] | 1.0 [6.89] | -[-] |
| Notched Izod (ft-lb/in of notch) (N per Cm of notch) | 5.3 (59.8) | 2.6 (29.4) | 5.0 (56.4) | 4.1 (46.3) |
| Drop Weight Impact (in/lb) [cm/kg] | 38 [43.1] | 23 [26.1] | 27 [30.6] | 32 [36.3] |
| M.I. | 2.3 | - | - | 1.6 |

A review of the results of Table 1 illustrates that the combination of the non-functional copolymer and the functionalized tri-block had a combination of high Notched Izod and Drop weight impact resistance.

Small handle drill housings were injection molded on a 200 ton injection molding machine at about 565°Fd (296°C) using the composition of Example 1 and Comparative Examples 2 and 3. The surface appearance of the Example 1 housing was very good. In comparison, the surfaces of housings made from Comparatives 2 and 3 had apparent flow marks, surface whitening and other imperfections due to stress and an unstable composition. It is believed that the Vistalon® and Kraton® in the Comparative Examples phase separated from the matrix nylon and could easily be removed under surface stress resulting in a white appearance.

EXAMPLE 2

The compositions of Example 2 and Comparative 4 were prepared in accordance with the method of Example 1. Results are summarized in Table 2. The compositions contain the same stabilizers, in the same amounts as Example 1.

Table 2

|  | Comp.4 | Ex.2 |
|---|---|---|
| Nylon 6 (balanced)<br>Fiberglass<br>Kraton 1901<br>Vistalon 746<br>Vistalon 878 | 51.61<br>33<br>7<br>7<br>- | 51.61<br>33<br>7<br>-<br>7 |
| Tensile Str. (psi x $10^3$) [kPa x $10^3$] | 20 [137.8] | 18.4 [126.7] |
| Flex. Str. (psi x $10^3$) [kPa x $10^3$] | 26.2 [180.5] | 27.0 [186.0] |
| Flex. Mod. (psi x $10^3$) [kPa x $10^3$] | 1.0 [6.9] | 0.94 [6.47] |
| Notched Izod (ft-lb/in) [N per cm] | 4.3 [48.5] | 5.8 [65.4] |
| Drop Wt. Impact (in/lb) [cm/kg] | 43 [48.7] | 76 [86.2] |

EXAMPLES 3 AND 4

Examples 3 and 4 and Comparatives 5-8 were made in accordance with the process recited above with specific compositions and properties summarized in Table 3 below:

8

Table 3

| | Comp. 5 | Ex. 3 | Ex. 4 | Comp. 6 | Comp. 7 | Comp. 8 |
|---|---|---|---|---|---|---|
| Nylon 6 (balanced) | 53.61 | 53.61 | 55.61 | 55.61 | 55.61 | 55.61 |
| Fiberglass | 33 | 33 | 33 | 33 | 33 | 33 |
| Kraton 1901 | 7.8 | 6.0 | 5.0 | 6.5 | 6.5 | - |
| Kraton 1650 | - | - | - | 3.5 | - | - |
| Kraton 1657 | 4.2 | - | - | - | 3.5 | - |
| Vistalon 730 | - | 6.0 | 5.0 | - | - | 10.0 |
| Tensile Str. (psi x 10³) [kPa x 10³] | 21.7 [149.5] | 21.4 [147.4] | 23.0 [158.5] | 22.7 [156.4] | 23.0 [158.5] | 24.0 [165.4] |
| Flex. Str. (psi x 10³) [kPa x 10³] | 28.0 [193] | 31.0 [216.6] | 33.0 [227.4] | 33.2 [228.7] | 32.0 [220.5] | 31.1 [214.3] |
| Flex. Mod. (psi x 10³) [kPa x 10³] | 9.97 [68.7] | 1.1 [7.6] | 1.1 [7.6] | 1.1 [7.6] | 1.1 [7.6] | 1.17 [8.1] |
| Notched Izod (ft-lb/in) [N/cm] | 4.3 [48.5] | 5.2 [58.7] | 4.6 [51.9] | 4.7 [53] | 5.0 [56.4] | 2.8 [31.6] |
| Drop Wt. Impact (in/lb) [cm/kg] | 37 [42] | 41 [46.5] | 40 [45.3] | 38 [43] | 38 [43] | 21 [23.8] |

Drill housings molded from the compositions of Examples 3 and 4 had superior appearance compared with drill housing molded from the compositions of Comparative examples 5-8.

EXAMPLE 5

A composition was melt blended with 83 weight percent polycaprolactam, 1.5 weight percent of the sodium stearate masterbatch (20 weight percent sodium stearate, 80 weight percent polyamide) 0.1 weight percent Irganox® 1010, and 0.4 weight percent Ultranox® 626, 7.5 weight percent Kraton® FG 1901 and 7.5 weight percent Exxalor® 901. Physical properties include a tensile strength of 5959 psi (41 kPa); flexural strength of 11,095 psi (76.4 kPa); flexural modulus of 285,047 psi (1.96 x 10³ kPa) and a notched Izod impact resistance value of 2.7 foot pounds per inch of notch (30.5 N per cm of notch).

EXAMPLES 6 and 7

The compositions summarized in Table 4 below were melt blended as described above. The nylon 6 was balanced polycaprolactam. The compositions all contained 1 weight percent of the sodium stearate/nylon 6 (SST) masterbatch. Comparative 10 and Example 6 contained potassium bromide and anhydrous cupric chloride heat stabilizers. Examples 6, and 7 contained 2.0 weight percent of o,p-toluene sulfonamide (o,p TS) plasticizer and Irganox® 1010 sold as a light and thermal stabilizer, as well as the stabilizer Ultranox® 626. Irganox® 1010 is tetrakis [methylene 3(3',5'-di-tert-butyl-4' hydroxy-phenyl) propionate]. Ultranox 626 is understood to be bis[2,4-di-t-butyphenyl] pentaerthritol] diphosphite. Thermal aging tensile strength tests were conducted according to ASTM D-638 using 1/8 and 1/32 inch (0.318cm and 0.159cm) thick molded tensile bars aged at 190°C, 200°C, 210°C for the indicated time periods. Results in pounds per square inch (psi) are summarized on Table 4 below for the average of five samples.

Table 4

| | Comp. 9 | Comp. 10 | Ex. 6 | Ex. 7 |
|---|---|---|---|---|
| Nylon 6 | 66 | 66.79 | 53.99 | 53.6 |
| Fiberglass | 33 | 33 | 33 | 33 |
| Kraton FB 1901 | - | - | 5 | 5 |
| Exxelor 901 | - | - | 5 | 5 |
| SST | 1 | 1 | 1 | 1 |
| Irg. 1010 | - | - | 0.1 | 0.1 |
| Ultranox 626 | - | - | 0.3 | 0.3 |
| O,p TS | - | - | 2.0 | 2.0 |
| KBr | - | 0.2 | 0.2 | - |
| $CuCl_2$ | - | 0.01 | 0.01 | - |

TABLE 4

| 1/8" (0.32 cm) Sample | Comp.9 T.Str. (psi)/ [% retained] & { kPa } | Comp.9 T.Str. (psi)/ [% retained] & { kPa } | Comp.10 T.Str. (psi)/ [% retained] & { kPa } | Ex.6 T.Str. (psi)/ [% retained] & { kPa } | Ex.6 T.Str. (psi)/ [% retained] & { kPa } | Ex.7 T.Str. (psi)/ [% retained] & { kPa } |
|---|---|---|---|---|---|---|
| Temperature: | 200°C | 190°C | 210°C | 200°C | 190°C | 210°C |
| 0 hours | 27485 / [--] { 189,370 } | 27485 / [--] { 189,370 } | 29480 / [--] { 203,117 } | 20879 / [--] { 143,856 } | 20879 / [--] { 143,856 } | 21735 / [--] { 149,754 } |
| 168 | 29180 /[106] { 201,050 } | ---- / [--] { -- } | ---- / [--] { -- } | 21923 /[105] { 151,050 } | ---- / [--] { -- } | 21554 / [99] { 148,507 } |
| 552 | ---- / [--] { -- } | ---- / [--] { -- } | 28689 / [97] { 197,667 } | ---- / [--] { -- } | ---- / [--] { -- } | ---- / [--] { -- } |
| 600 | 26859 / [98] { 185,058 } | 26534 / [97] { 182,820 } | ---- / [--] { -- } | 22347 /[107] { 153,970 } | 20258 / [97] { 139,577 } | ---- / [--] { -- } |
| 840 | ---- / [--] { -- } | ---- / [--] { -- } | 27010 / [92] { 186,100 } | ---- / [--] { -- } | ---- / [--] { -- } | 18915 / [87] { 130,324 } |
| 1176 | 9711 / [36] { 66,910 } | ---- / [--] { -- } | 20518 / [70] { 141,369 } | 19126 / [92] { 131,778 } | ---- / [--] { -- } | ---- / [--] { -- } |
| 1272 | 9051 / [33] { 62,361 } | ---- / [--] { -- } | ---- / [--] { -- } | ---- / [--] { -- } | ---- / [--] { -- } | ---- / [--] { -- } |
| 1344 | ---- / [--] { -- } | 19024 / [69] { 131,075 } | 18945 / [64] { 130,531 } | ---- / [--] { -- } | 18813 / [90] { 129,620 } | 13130 / [50] { 90,465 } |

EP 0 494 145 B1

## TABLE 4

| 1/32"(0.159 cm) Sample | Comp.9 T.Str. (psi)/ [% retained] & { kPa } | Comp.9 T.Str. (psi)/ [% retained] & { kPa } | Comp.10 T.Str. (psi)/ [% retained] & { kPa } | Ex.6 T.Str. (psi)/ [% retained] & { kPa } | Ex.6 T.Str. (psi)/ [% retained] & { kPa } | Ex.7 T.Str. (psi)/ [% retained] & { kPa } |
|---|---|---|---|---|---|---|
| Temperature: | 200 deg.C | 190 deg.C | 210 deg.C | 200 deg.C | 190 deg.C | 210 deg.C |
| 0 hours | 23500 / [--] { 161,915 } | 23500 / [--] { 161,915 } | 24389 / [--] { 168,040 } | 17544 / [--] { 120,878 } | 17544 / [--] { 120,878 } | 18162 / [--] { 125,136 } |
| 168 | 23368 / [99] { 161,295 } | --- / [--] { -- } | --- / [--] { -- } | 20264 / [116] { 139,619 } | --- / [--] { -- } | 19076 / [105] { 131,433 } |
| 552 | --- / [--] { -- } | --- / [--] { -- } | 19238 / [79] { 132,550 } | --- / [--] { -- } | --- / [--] { -- } | --- / [--] { -- } |
| 600 | 19817 / [84] { 136,539 } | 19672 / [84] { 135,540 } | --- / [--] { -- } | 18215 / [104] { 125,501 } | 18488 / [105] { 127,382 } | --- / [--] { -- } |
| 840 | --- / [--] { -- } | --- / [--] { -- } | 18611 / [76] { 128230 } | --- / [--] { -- } | --- / [--] { -- } | 13979 / [77] { 96,315 } |
| 1176 | 8101 / [34] { 55,816 } | --- / [--] { -- } | 11090 / [45] { 76,410 } | 16075 / [92] { 110,756 } | --- / [--] { -- } | --- / [--] { -- } |
| 1279 | 6895 / [29] { 47,506 } | --- / [--] { -- } | --- / [--] { -- } | --- / [--] { -- } | --- / [--] { -- } | --- / [--] { -- } |
| 1344 | --- / [--] { -- } | 13934 / [59] { 96,005 } | 6316 / [26] { 43,517 } | --- / [--] { -- } | 16166 / [92] { 111,383 } | 14121 / [78] { 97,293 } |

## Claims

1. An impact-resistant composition which includes between 30 and 96 percent by weight of at least one polyamide,
   between 2 and 35 percent by weight of a non-functional olefinic copolymer,

12

EP 0 494 145 B1

which is **characterized** by:

including between 2 and 35 percent of a functionalized tri-block copolymer comprising poly-(ethylene/butylene)mid-blocks and poly(styrene) end-blocks, and functionalized groups selected from alpha, beta-ethylenically unsaturated carboxylic acids monomers having from 3 to 8 carbon atoms, at least two carboxylic acid groups, or hydrides thereof.

2. The impact-resistant composition according to claim 1 further **characterized** by:

additionally including a fibrous filler in an amount of between 1 to 60 percent by weight based on the weight of the composition.

3. The impact-resistant composition according to claim 2 further **characterized** by:

in that fiberglass is used as the fibrous filler.

4. The composition according to claim 1 further **characterized** by:

in that the ratio of the olefinic polymer to the functionalized block copolymer is from 1:5 to 5:1.

5. The composition according to any preceeding claim further **characterized** by:

in that the functionalized groups are grafted onto the block copolymer.

6. The composition according to any preceeding claim further **characterized** by:

in that the functionalized groups are derived from maleic anhydride or maleic acid.

7. The composition according to any preceeding claim further **characterized** by:

in that the polyamide comprises 3 to 97 mole percent polyamide having at least two end groups consisting of amine end groups and selected from polycaprolactam, poly(hexamethylene adipamide), poly(tetramethylene adipamide);

and that the copolymer is selected from hexamethylenadipamide, caprolactam, and mixtures thereof.

8. The composition according to claim 7 further **characterized** by:

in that the olefinic polymer is a copolymer of ethylene and propylene.

9. The composition according to any preceeding claim further **characterized** by:

in that the functionalized block copolymer consists of between 5 and 50 percent by weight poly-(styrene) end blocks, between 50 and 90 percent by weight poly(ethylene/butylene) blocks, and up to 5 percent by weight functionalized groups.

**Patentansprüche**

1. Schlagfeste Zusammensetzung, welche zwischen 30 und 96 Gewichtsprozent von wenigstens einem Polyamid aufweist, und

zwischen 2 und 35 Gewichtsprozent eines nicht-funktionellen Olefin-Copolymers,

welches dadurch **gekennzeichnet** ist, daß:

es zwischen 2 und 35 Prozent eines funktionalisierten Tri-Block-Copolymers mit mittleren Blöcken aus Poly(Äthylen/Butylen) und Endblöcken aus Poly(Styrol) sowie funktionalisierte Gruppen aufweist, die aus alpha,beta-äthylenungesättigten Carbonsäuremonomeren mit 3 bis 8 Kohlenstoffatomen, wenigstens zwei Carbonsäuregruppen oder deren Anhydriden gewählt sind.

2. Schlagfeste Zusammensetzung nach Anspruch 1, welche ferner dadurch **gekennzeichnet** ist, daß:

sie zusätzlich ein faseriges Füllmaterial in einer Menge zwischen 1 bis 60 Gewichtsprozent, basierend auf dem Gewicht der Zusammensetzung, aufweist.

13

3. Schlagfeste Zusammensetzung nach Anspruch 2, welche ferner dadurch **gekennzeichnet** ist, daß:
Fiberglas als faseriges Füllmaterial verwendet ist.

4. Zusammensetzung nach Anspruch 1, welche ferner dadurch **gekennzeichnet** ist, daß:
das Verhältnis des Olefinpolymers zum funktionalisierten Block-Copolymer 1:5 bis 5:1 beträgt.

5. Zusammensetzung nach einem der vorhergehenden Ansprüche, welche ferner dadurch **gekennzeichnet** ist, daß:
die funktionalisierten Gruppen auf das Block-Copolymer gepfropft sind.

6. Zusammensetzung nach einem der vorhergehenden Ansprüche, welche ferner dadurch **gekennzeichnet** ist, daß:
die funktionalisierten Gruppen von Maleinsäureanhydrid oder Maleinsäure abgeleitet sind.

7. Zusammensetzung nach einem der vorhergehenden Ansprüche, welche ferner dadurch **gekennzeichnet** ist, daß:
das Polyamid 3 bis 97 Molprozent Polyamid mit wenigstens zwei aus Aminendgruppen bestehenden Endgruppen aufweist, welches aus Polycaprolactam, Poly(Hexamethylen-Adipamid) und Poly-(Tetramethylen-Adipamid) gewählt ist;
und daß das Copolymer aus Hexamethylen-Adipamid, Caprolactam und Mischungen davon ausgewählt ist.

8. Zusammensetzung nach Anspruch 7, welche ferner dadurch **gekennzeichnet** ist, daß:
das Olefinpolymer ein Copolymer von Äthylen und Propylen ist.

9. Zusammensetzung nach einem der vorhergehenden Ansprüche, welche ferner dadurch **gekennzeichnet** ist, daß:
das funktionalisierte Block-Copolymer aus zwischen 5 und 50 Gewichtsprozent Poly(Styrol)-Endblöcken, zwischen 50 und 90 Gewichtsprozent Poly(Äthylen/Butylen)-Blöcken und bis zu 5 Gewichtsprozent an funktionalisierten Gruppen besteht.

**Revendications**

1. Composition résistant aux chocs qui comprend entre 30 et 96 % en poids d'au moins un polyamide,
entre 2 et 35 % en poids d'un copolymère oléfinique non fonctionnel,
qui est caractérisée par :
le fait de comporter entre 2 et 35 % d'un copolymère tri-séquencé fonctionnalisé comprenant des séquences médianes de poly(éthylène/butylène) et des séquences terminales de poly(styrène), et des groupes fonctionnalisés choisis parmi des monomères d'acides carboxyliques alpha, béta-éthyléniquement insaturés ayant de 3 à 8 atomes de carbone, au moins deux groupes acide carboxylique ou des anhydrides de ceux-ci.

2. Composition résistant aux chocs selon la revendication 1,
caractérisée en outre par :
le fait qu'elle comporte en plus une charge fibreuse dans une quantité comprise entre 1 et 60 % en poids par rapport au poids de la composition.

3. Composition résistant aux chocs selon la revendication 2,
caractérisée en outre en ce que :
de la fibre de verre est utilisée comme charge fibreuse.

4. Composition selon la revendication 1, caractérisée en outre en ce que :
le rapport entre le polymère oléfinique et le copolymère séquencé fonctionnalisé est compris entre 1:5 et 5:1.

5. Composition selon l'une quelconque des revendications précédentes,
caractérisée en outre en ce que :
les groupes fonctionnalisés sont greffés sur le copolymère séquencé.

6. Composition selon l'une quelconque des revendications précédentes, caractérisée en outre en ce que :

les groupes fonctionnalisés sont obtenus à partir de l'anhydride maléique ou de l'acide maléique.

7. Composition selon l'une quelconque des revendications précédentes, caractérisée en outre en ce que:

le polyamide comprend 3 à 97 moles % d'un polyamide ayant au moins deux groupes terminaux constitués de groupes terminaux amine et choisis parmi les : polycaprolactame, poly(hexaméthylène adipamide), poly(tétraméthylène adipamide);

et en ce que le copolymère est choisi parmi les : hexaméthylèneadipamide, caprolactame, et des mélanges de ceux-ci.

8. Composition selon la revendication 7, caractérisée en outre en ce que :

le polymère oléfinique est un copolymère d'éthylène et de propylène.

9. Composition selon l'une quelconque des revendications précédentes, caractérisée en outre en ce que :

le copolymère séquencé fonctionnalisé comprend de 5 à 50 % en poids de séquences terminales de poly(styrène), entre 50 et 90 % en poids de séquences de poly(éthylène/butylène), et jusqu'à 5 % en poids de groupes fonctionnalisés.